# EUROPEAN PATENT SPECIFICATION

(11) **EP 0 581 351 B1**
(45) Date of publication and mention of the grant of the patent: **29.03.2000**
(21) Application number: 93201938.3
(22) Date of filing: 02.07.1993
(51) Int. Cl.: H04B 3/54

(54) **Transceiver for the exchange of informations along lines for the transport of electric power**
Sendeempfänger zum Informationsaustausch entlang elektrischer Netzleitungen
Emetteur-récepteur pour l'échange d'information le long des lignes d'alimentation

(30) Priority: 24.07.1992 IT MI921808
(43) Date of publication of application: 02.02.1994
(73) Proprietor: ITALTEL SOCIETA ITALIANA TELECOMUNICAZIONI s.p.a., 20149 Milano (IT)
(72) Inventor: Guardiani, Bruno, I-67100 L'Aquila (IT); Lauro Grotto, Uberto, I-20131 Milano (IT)
(74) Representative: Giustini, Delio

(56) References cited:
- EP-A- 0 124 260
- US-A- 3 924 224
- J. MILLMAN, C.C. HALKIAS: "Integrated Electronics: Analog and Digital Circuits and Systems" , , MCGRAW-HILL, 1985

## Description

### Field of the Invention

The present invention relates generally to a transceiver of the half duplex type for the exchange of data on lines for the transport of electric power, and in particular electric lines for low and medium voltage.

The invention finds its preferable application, but not restricted to, for the data exchange between customers (in a large sense) connected to the electric line, as for the data exchange between the customers and a co-ordination and collection centre in order to realize the remote reading of the electricity meters, however this application should not be understood in a restrictive sense. The invention can for example find an application also for the transmission of reading data of meters, different from the electric ones, for messages about the condition of the network, in home automation systems with remote control, etc.

### Background Art

Transceiver equipments are known which include generally a modem connected on one side to the electric line through a coupler and on the other side to a unit including devices in direction of the customers (more or less permanent memory where programmes and parameters are stored as well as partial data prior to the transmission, a possible local displays of the transmitted information, etc.).

These operate normally in reception, and, when they receive a message addressed to them, they are programmed to respond within a predetermined time.

The transceiver equipments of this type, seen the scheduled widespread diffusion, must have a low production price, but at the same time also high quality characteristics in order not to create interferences and problems in the network, they are included in. In equipments of this type it is further necessary to reduce the emission of harmonics to the minimum.

An international regulation in fact provides that each device included in the network does not introduce, beyond the 150 kHz, disturbances higher than a certain fixed value. This involves the solution of an important technical problem as these equipments are not passive with respect to the network, but provide for a transmission with the consequent unavoidable emission of unwelcome harmonics. The use of filters does not resolve in a satisfactory way the problem, as on one side this filter would have to operate on one line with an impedance which is not steady and varies largely in module as well as in phase, and on the other side it is in opposition to the requirements for low costs and reduced encumbrance.

Devices are also known shaped in a way to show high impedance when operating in transmission (they are in this condition assimilable for example to a current generator) and showing low impedance when operating in reception (they are in this condition assimilable for example to a voltage generator).

These known devices have the disadvantage that the switching from one stage to the other generates disturbances (and therefore the emission of harmonics on the line) and further that in the condition of low impedance they turn out to be very vulnerable, for example they are susceptible to be destroyed by strokes.

To overcome these problems it is possible to use a transmitter operating as a current generator (which presents high impedance in transmission as well as in reception), however it must be taken into consideration that the impedance offered by the electric line may widely vary, and go down even to very low values with the consequence that in transmission the device generates a variable voltage in relation to the instant line impedance value. In other words in presence of a line impedance decrease these known devices generating a constant current, have the tendency to reduce proportionally the voltage supplied to the line.

"Push-pull amplifiers", pages 690 and 691 in the book "Integrated Electronics: Analog and Digital Circuits and Systems" by J. Millman and C.C. Halkias, McGraw-Hill 1985 discloses a transceiver adapted to exchange control data and information on lines, the lines being adapted for the transport of electric power.

This transceiver including:
- a line coupler consisting of a transformer having a first winding N2 connected to the relative line for the transport of electric power and further windings N1 and N2;
- an output power stage connected to said further windings including an amplifier stage of the push-pull type operating in A class and at low distortion, working as a current generator.

This transceiver however:
- does not include an output power stage having a predetermined internal impedance;
- is not adapted to limit the level of the signal supplied to the line by said output power stage when the impedance of the line itself increase over a predetermined value.

### Objects of the Invention

It is in general object of the present invention to overcome the above mentioned problems and restriction and in particular to realize a device with low production costs, being adapted to the line showing a steady and stable impedance in transmission as well as in reception, sending in the same time on the transmission line a steady voltage in case of line impedance variation.

Another object of the present invention is the realization of a device shaped in a way to minimize the emission of harmonics on the transmission line, as well as the reduction of the load applied to the line with respect to that applied by the known equipments in order to avoid the introduction of excessive attenuations of the line.

### Disclosure of the Invention

According to the invention these objects are achieved by means of a transceiver for the exchange of control data and information on lines for the transport of electric power of the type including:
- a modulation/demodulation device;
- a line coupler consisting of a transmission winding, a reception winding connected to the relative line for the transport of electric power;
- an output power stage connected to said transmission winding including an amplifier stage of the push-pull type operating in A class and at low distortion working as a current generator.

Said transceiver being characterized in that said output power stage includes:
- means adapted to attribute to said current generator a predetermined internal impedance
- voltage regulation means adapted to reduce the current supplied by said current generator when the impedance of said line for the transport of electric power exceeds a predetermined threshold;

### Brief Description of the Drawings

The features of the present invention which are believed to be novel are set forth with particularity in the appended claims.

The invention, together with further objects and advantages thereof, may best be understood by making reference to the following description taken together with the accompanying drawing wherein
- figure 1 shows the block diagram of the transceiver RT according to the invention;
- figure 2 shows in details the line interface IDL and the coupler ACC of figure 1, according to the invention;
- figure 3 shows in details the amplification means MA of figure 2 according to the invention.

### Detailed Description of the Preferred Embodiment

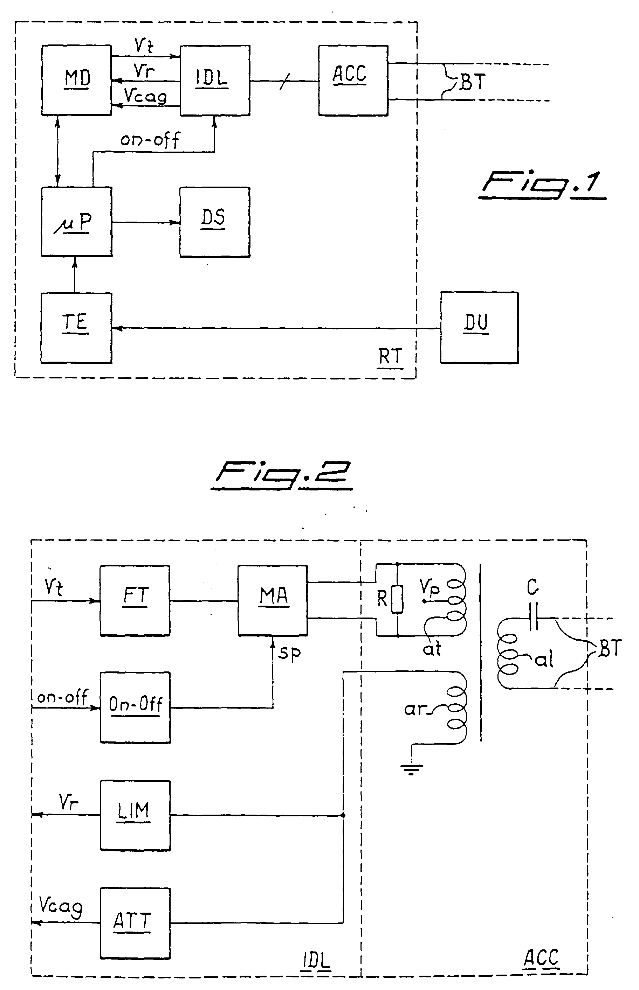

Referring to the diagram of figure 1 the transceiver RT according to the invention turns out to be connected to a device DU for the survey of the power consumption effected by the considered customer. In particular this customer device DU is connected to a transducer TE able to convert the signals supplied by the device DU into signals of the electric type which reaching a micro processor µP.

To this one a display DS is connected suitable to visualize the power consumption of the customer as well as to visualize for example messages emitted by a coordination and collection centre to which said transceiver is connected.

The micro processor µP is in fact connected to a modulation/demodulation device MD suitable to transmit and receive on a low voltage line BT through a line interface IDL and through a line coupler ACC.

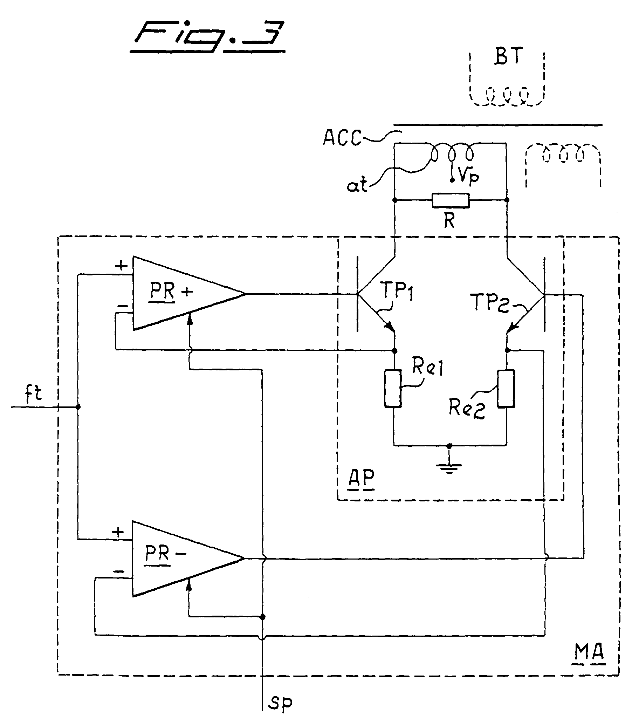

The line coupler ACC is illustrated in details in figure 2 and includes a line winding al connected to the low voltage line BT through a capacitor C presenting high impedance with respect to the network voltage and at the same time low impedance with respect to the signal transmitted on the BT line.

The winding al is magnetically coupled to a transmission winding at including a centre tap connected to a power source Vp as well as to a reception winding ar with one earthed lug.

The line interface IDL includes a transmission filter FT which receives at the input the signal supplied by the modulation/demodulation device MD which according to a preferred embodiment of the invention - also in order to cut down the costs of the transceiver RT - is of the type with switching capacity. As known an apparatus MD realized as specified above can be implemented in C-MOS technology (and therefore at low cost), it has a good efficiency and a quite limited power consumption, but it has the drawback that supplies a signal characterized by a poor purity.

According to the above without the FT filter, there would be a discrete number of harmonics associated to the useful signal introduced on the BT line. Therefore the FT filter supplies a signal, characterized by a considerable purity, and this purity must also be maintained during the amplification procedure realized by the amplification means as described in the following referring to figure 3.

In order to contain the power consumption of said transceiver, the line interface IDL includes an On-Off unit, suitable to determine the switching-off of the amplification means MA (by means of the sp connection) during the periods in which the transceiver is not used for the transmission of a message.

The IDL unit includes further a limiter LIM and an attenuator ATT which are connected to the reception winding ar of the ACC coupler.

In particular the limiter LIM has the function to limit the level of the useful signal (received by means of the low voltage line BT) which is to reach the MD device through the Vr connection, in order not to overload this unit with signals of high amplitude.

The ATT attenuator has on the other hand the function to supply a gain control signal Vcag, to make an automatic regulation of the level of the signal transmitted by the MD device possible. In particular after the MD device has transmitted a signal of a fixed level, this one passes through the FT and MA units, and by means of the at transmission winding it couples magnetically with the ar reception winding and reaches at the input the ATT attenuator supplying the MD device with the Vcag signal.

This signal is compared to a reference signal, and an error signal is generated defining the level adjustment of the VT signal until said error signal is cancelled.

In figure 3 the amplification means are shown in details which, according to a preferred embodiment of the invention, include a pair of preamplifiers PR+ and PR-connected to the output of the FT filter, and they pilot on the base two power transistors TP1 and TP2 being part of a power amplifier AP. The emitters of these transistors are earthed by means of a respective emitter resistance Re1 and Re2, while the collectors are fed by said power source Vp connected to the central tap of the at transmission winding.

As it can be observed, the two power transistors are connected according to the PUSH-PULL configuration in A class implementing a current generator which presents then high impedance towards the line in transmission as well as in reception

For systemic reasons the impedance value in direction of the BT transmission line is fixed at a predetermined value - preferably oscillating between 100 and 500 Ω - by means of the resistance means R connecting the collectors of transistors TP1 and TP2. In particular the limitation of the output impedance of the power amplifier AP is suitable for example in order not to load excessively the line with high impedance, especially in the case of long lines and/ or of a parallel connection of several DU customer devices.

It will be possible to appreciate that the particular push-pull A class configuration of the power amplifier AP makes it possible to achieve the following advantages:
A) It allows the implementation of a current generator which, for very low impedances of the network, maintains the current stable and the output voltage is proportional to the line impedance; beyond a predetermined impedance value, the current generator reduces on the other hand the emitted current in order to maintain the output voltage constant, all this without any inconvenience for the purity of the output wave form;
B. the preamplifiers PR+ and PR- supply the two power transistors TP1 and TP2 with two signals perfectly in opposition which, thanks to said push-pull A class configuration, determine the theoretical cancellation of the even harmonics;
C. the current supplied by the source Vp (injected through the central tap of the at winding) generates two flows of the same intensity, but of opposed sign cancelling each other mutually, making a drastic reduction of the non linearity contributions due to the saturation of the ACC coupler core;
D. the negative feedback carried out by the two preamplifier PR+ and PR- makes it possible to further minimize the distortion existing on the emitters of the power transistors PR+ and PR- independently from the order of the harmonics.
E. The load applied to the line is defined by said resistance R and therefore an excessive attenuation of the line is not introduced.

According to a preferred embodiment of the invention the line interface IDL is realized in form of an integrated circuit with exclusion of the two power transistors TP1 and TP2 which are fitted externally to the relative chip in order to increment the dispersible power.

In relation to the above mentioned it turns out to be evident that the transceiver according to the invention makes it possible to achieve the above mentioned objects as:
- it is possible to couple it with a modulation/demodulation device MD at low cost and realizable in an integrated form;
- it is adapted to the line having a constant and stable impedance and therefore it sends in line in transmission a constant voltage in case of line impedance variation;
- the sending of harmonics on the transmission line is minimized due to the achievable advantages with the particular configuration of the power amplifier AP and the preamplifier PR+ and PR- as above enounced referring to the points A, B, C, D and E.

It will be understood by those skilled in the art that various modifications and changes may be made to the present invention without departing from the scope thereof.

## Claims

1. Transceiver for the exchange of control data and information on lines for the transport of electric power of the type including:
• a modulation/demodulation device (MD);
• a line coupler (ACC) consisting of a transmission winding (at), a reception winding (ar) connected to the relative line for the transport of electric power
• an output power stage connected to said transmission winding including an amplifier stage of the push-pull type operating in A class and at low distortion working as a current generator,
characterized in that said output power stage includes:
• means (R) adapted to attribute to said current generator a predetermined internal impedance
• voltage regulation means (PR+ and PR-) adapted to reduce the current supplied by said current generator when the impedance of said line for the transport of electric power exceeds a predetermined threshold;

2. Transceiver according to claim 1, characterized in that said voltage regulation means (PR+ and PR-) are realized by means of two differential amplifiers receiving at the not inverting input the signal supplied by the modulation/demodulation device (MD) and piloting on the base a respective power transistor (TP1 and TP2 respectively) of said output power stage, the collectors of which being connected to a power source (Vp) through a respective half of the winding of said transmission winding (at), and the emitters of which being earthed through a respective emitter resistance (Re1 and Re2 respectively); the inverting input of the above mentioned differential amplifiers (PR+ and PR- respectively) being connected to the emitter of the respective power transistor (TP1 and TP2 respectively).

3. Transceiver according to the claims 1 and 2, characterized in that said means adapted to attribute to said current generator a predetermined internal impedance are in form of a resistance (R), connected in parallel to said transmission winding (at).

4. Transceiver according to claims 1 and 2 characterized in that through said modulation/demodulation device (MD) and the amplification means (MA) a transmission filter (FT) is included.

5. Transceiver according to claim 1, characterized in that to said reception winding (ar) a limiter is connected, suitable to limit the power of the signal (Vr) which is to be supplied to the modulation/demodulation device (MD).

6. Transceiver according to claims 1 and 5, characterized in that to the above mentioned reception winding (ar) a further attenuator (ATT) is connected, suitable to supply an automatic control signal (Vcag) for the modulation/demodulation device (MD) gain.

7. Transceiver according to claim 1, characterized in that it includes further a device (On-Off) suitable to determine the switching off of the amplification means (MA) during the periods in which the transceiver (RT) is not engaged in a transmission procedure.

## Patentansprüche

1. Sendeempfänger für den Austausch von Steuerdaten und -informationen entlang von Leitungen für den Transport elektrischen Stroms, der eine Modulations-/Demodulationsvorrichtung (MD) und einen Leitungskuppler (ACC) einschließt, welcher aus einer Übertragungsspule (at), einer Empfangsspule (ar) besteht, die mit der entsprechenden Leitung zur Übertragung elektrischen Stroms verbunden sind, dadurch gekennzeichnet, daß zwischen der genannten Modulations-/Demodulationsvorrichtung (MD) und dem Kuppler ein Leitungs-Interface (IDL) eingebunden ist, das Verstärkervorrichtungen (MA) einschließt, die sich aus zwei Steuerstromkreisen mit entgegengesetzten Phasen (PR+ und PR-) einer Ausgangsleistungsstufe zusammensetzt, die aus einer in der A Klasse funktionierenden Verstärkerstufe vom Typ "push and pull" mit geringer Verzerrung besteht, die als Stromgenerator arbeitet.

2. Sendeempfänger entsprechend Anspruch 1, dadurch gekennzeichnet, daß die genannten Steuerstromkreise (PR+ und PR-) mittels zweier Differentialverstärker verwirklicht werden, die am nicht invertierenden Eingang das durch die Modulations-/Demodulationsvorrichtung (MD) gelieferte Signal empfangen und auf der Basis einen entsprechenden Leistungstransistor (TP1 beziehungsweise TP2) der genannten Ausgangsleistungsstufe steuern, deren Kollektoren mit einer Spannungsquelle (Vp) durch eine entsprechende Hälfte der Spule der genannten Übertragungsspule (at) verbunden sind, und deren Emitter durch einen entsprechenden Emitterwiderstand (Re1 beziehungsweise Re2) geerdet ist, wobei der invertierende Eingang der vorstehend genannten Differentialverstärker (PR+ beziehungsweise PR-) mit dem Emitter des entsprechenden Leistungstransistors (TP1 beziehungsweise TP2) verbunden ist..

3. Sendeempfänger entsprechend den Ansprüchen 1 und 2, dadurch gekennzeichnet, daß er einen Widerstand (R) einschließt, der parallel mit der genannten Übertragungsspule verbunden ist.

4. Sendeempfänger entsprechend den Ansprüchen 1 und 2, dadurch gekennzeichnet, daß durch die genannte Modulations-/Demodulationsvorrichtung (MD) und die Verstärkervorrichtungen (MA) ein Übertragungsfilter (FT) eingeschlossen ist.

5. Sendeempfänger entsprechend Anspruch 1, dadurch gekennzeichnet, daß mit der genannten Empfangsspule (ar) ein Begrenzer gekoppelt ist, der geeignet ist, die Spannung des Signals (Vr) zu begrenzen, die der Modulations-/Demodulationsvorrichtung (MD) zuzuführen ist.

6. Sendeempfänger entsprechenden Ansprüchen 1 und 5, dadurch gekennzeichnet, daß mit der vorstehend genannten Empfangsspule (ar) ein weiterer Dämpfer (ATT) verbunden ist, der geeignet ist, ein Signal (Vcag) zur automatischen Regulierung der Verstärkung der Modulations-/Demodulationsvorrichtung(MD) zu liefern.

7. Sendeempfänger entsprechend Anspruch 1, dadurch gekennzeichnet, daß er weiter eine Vorrichtung (On - Off) einschließt, die geeignet ist, das Anschalten der Verstärkervorrichtungen (MA) während der Perioden zu bestimmen, in denen der Sendeempfänger (RT) nicht durch einen Übertragungsvorgang in Anspruch genommen wird.

## Revendications

1. Emetteur-récepteur pour l'échange de données et d'information de contrôle sur des lignes pour le transport d'énergie électrique comprenant un dispositif de modulation/démodulation (MD) et un connecteur de ligne (ACC) constitué par un enroulement de transmission (at), un enroulement de réception (ar) connectés à la ligne respective pour le transport d'énergie électrique, caractérisé en ce qu'entre le dît dispositif de modulation/démodulation (MD) et le connecteur une interface de ligne (IDL) est connectée, qui comprend des moyens d'amplification (MA), qui consistent en deux circuits de pilotage en contre phase (PR+ et PR-) d'un étage de puissance de sortie comprenant un étage amplificateur du type "push-pull" fonctionnant en classe A et à basse distorsion, qui fonctionne comme un générateur de courant.

2. Emetteur-récepteur selon la revendication 1, caractérisé en ce que les dits circuits de pilotage (PR+ et PR-) sont réalisés par deux amplificateurs différentiels, qui reçoivent à l'entrée non invertissante le signal fourni par le dispositif de modulation/démodulation (MD) et qui pilotent sur la base un transistor de puissance (respectivement TP1 et TP2) respectif du dît étage de puissance de sortie, dont le collecteurs sont connectés à une source d'énergie (Vp) par une moitié respective de l'enroulement du dît enroulement de transmission (at), et dont les émetteurs sont mis à masse par une résistance d'émetteur (Re1 et Re2 respectivement), l'entrée invertissante des amplificateurs différentiels mentionnés ci-dessus (PR+ et PR- respectivement) étant connectée à l'émetteur du transistor de puissance respectif (TP1 et TP2 respectivement).

3. Emetteur-récepteur selon les revendications 1 et 2, caractérisé en ce qu'il comprend une résistance ® connectée en parallèle au dît enroulement de transmission (at).

4. Emetteur-récepteur selon les revendications 1 et 2, caractérisé en ce que par le dît dispositif de modulation/démodulation (MD) et les moyens d'amplification (MA) un filtre de transmission (FT) est compris.

5. Emetteur-récepteur selon la revendication 1, caractérisé en ce qu'à l'enroulement de réception (ar) un limiteur est connecté, qui est apte à limiter la puissance du signal (Vr), qui doit être fourni au dispositif de modulation/démodulation (MD).

6. Emetteur-récepteur selon les revendications 1 et 5, caractérisé en ce qu'à l'enroulement de réception (ar) mentionné ci-dessus un autre atténuateur (ATT) est connecté, qui est apte à fournir un signal (Vcag) de contrôle automatique du gain du dispositif de modulation/démodulation (MD).

7. Emetteur-récepteur selon la revendication 1, caractérisé en ce qu'il comprend en plus un dispositif (On-Off) apte à déterminer l'interruption des moyens d'amplification (MA) pendant les périodes durant lesquels l'émetter-récepteur (RT) n'est pas engagé dans une procédure de transmission.
